# EUROPEAN PATENT APPLICATION

(11) **EP 4 595 938 A1**
(43) Date of publication of application: **06.08.2025**
(21) Application number: 23871279.8
(22) Date of filing: 02.05.2023
(51) Int. Cl.: A61H 1/02, B25J 11/00

(54) **HUMAN BODY SUPPORT APPARATUS AND FALL INHIBITION APPLIANCE**

(30) Priority: 28.09.2022 JP 2022154464
(71) Applicant: Innophys Co., Ltd., Hachioji-shi, Tokyo 192-0082 (JP)
(72) Inventor: KOBAYASHI, Hiroshi, Tokyo 162-8601 (JP); JITSUKAWA, Ryouta, Tokyo 162-8601 (JP); TAKAYAMA, Keita, Tokyo 162-8601 (JP); KUDO, Fumiya, Tokyo 162-8601 (JP)
(74) Representative: Grünecker Patent- und Rechtsanwälte PartG mbB
(86) International application number: PCT/JP2023/017185
(87) International publication number: WO 2024/070031

(57) **Abstract**

Provided are a human body support apparatus and a fall inhibition appliance that slowly apply an assisting force in accordance with the motion of a worker during work and that make it possible to provide assistance for the worker's natural movement. A human body support apparatus 1 comprises: a first tension spring 31 which is disposed on the back of a user P along the vertical direction of the back; a second tension spring 71 which is to be attached to legs of the user P; and a connection member 51 which connects the first tension spring 31 and the second tension spring 71. The spring constant of the first tension spring 31 is different from that of the second tension spring 71, and the spring constant of the first tension spring 31 is greater than that of the second tension spring 71. The first tension spring 31 stretches as a result of the second tension spring 71 being restricted so as to not stretch beyond a prescribed length when pulled to the prescribed length.

## Description

### TECHNICAL FIELD

The present invention relates to a human body supporting device and a fall arrest apparatus.

### BACKGROUND ART

Assistive devices for reducing the burden on workers during work have been known in the fields of material handling and elderly care (see, for example, Patent Document 1).

### Citation List

### Patent Document

Patent Document 1: Japanese Unexamined Patent Application, Publication No. 2021-171360

### DISCLOSURE OF THE INVENTION

### Problems to be Solved by the Invention

The assistance provided by the aforementioned assistive devices for reducing the burden on workers during work is perceived as unnatural, and users feel somewhat uncomfortable when using the devices. As such, there has been a desire to provide assistive devices that have a more natural feel in providing assistance when performing work.

An object of the present invention is to provide a human body supporting device and a fall arrest apparatus that make it possible to assist a worker with natural movement by gently applying assistive force in accordance with the motion of the worker during work.

### Means for Solving the Problems

The present invention relates to a human body supporting device including: a first tension spring that is positioned at the back of a user to run in an up-down direction of the back; second tension springs that are mounted on the lower limbs of the user; and a linking member linking the first tension spring and the second tension springs, wherein the first tension spring has a different spring constant from the second tension springs, and the spring constant of the first tension spring is greater than the spring constant of the second tension springs.

Preferably, the second tension springs are restricted from extending beyond a predetermined length once the second tension springs have been stretched to the predetermined length, thereby allowing the first tension spring to extend. Preferably, the human body supporting device further includes a separation member that is positioned between the linking member and the user, and separates a lower end portion of the first tension spring from the back of the user.

Preferably, the linking member is bifurcated into a left-side linking part and a right-side linking part at a location closer to the lower limbs of the user than the separation member, the second tension springs include a left-side second spring part that is positioned on the back side of the left leg and a right-side second spring part that is positioned on the back side of the right leg, the left-side linking part is connected to the left-side second spring part, and the right-side linking part is connected to the right-side second spring part.

Preferably, the human body supporting device further includes upper body-mounted belts that are respectively mounted on the left and right shoulders of the user, and end portions of the upper body-mounted belts are fastened to an upper end portion of the first tension spring. Preferably, the upper end portion of the first tension spring and lower end portions of the upper body-mounted belts that are respectively mounted on the left and right shoulders of the user are linked using a belt linking member. Preferably, the first tension spring is made of a rubber tube.

Preferably, the second tension springs are each made of a flat rubber strip covered by a covering member including a first wire and a second wire braided together in an intersecting arrangement, and the covering member restricts the flat rubber strip from extending beyond a predetermined length once the flat rubber strip has been stretched to the predetermined length. Preferably, the spring constant of the first tension spring is four to eight times the spring constant of the second tension springs.

The present invention also relates to a human body supporting device including: a first tension spring that is positioned at the back of a user to run in an up-down direction of the back; second tension springs that are mounted on the lower limbs of the user; and a linking member linking the first tension spring and the second tension springs, wherein a displacement with which the second tension springs extend upon being stretched with a predetermined force is greater than a displacement with which the first tension spring extends upon being stretched with the predetermined force.

Preferably, the human body supporting device further includes a restriction member that restricts each of the second tension springs from extending beyond a predetermined length once the second tension springs have been stretched to the predetermined length.

The present invention also relates to a fall arrest apparatus including the human body supporting device having any one of the configurations described above.

### Effects of the Invention

According to the present invention, it is possible to provide a human body supporting device that makes it possible to assist a worker with natural movement by gently applying assistive force in accordance with the motion of the worker during work.

### BRIEF DESCRIPTION OF THE DRAWINGS

FIG. 1 is a back view of a worker wearing a human body supporting device according to a first embodiment of the present invention;
FIG. 2 is a front view of the worker wearing the human body supporting device according to the first embodiment of the present invention;
FIG. 3 is a side view of the worker wearing the human body supporting device according to the first embodiment of the present invention and touching his/her knees with his/her hands;
FIG. 4 is a side view of the worker wearing the human body supporting device according to the first embodiment of the present invention and touching a floor with his/her hands; FIG. 5 is a graph showing change in the value of distance L measured when workers wearing the human body supporting device according to the first embodiment of the present invention were touching their knees with their hands and when the workers were touching a floor with their hands;
FIG. 6 is a back view of a worker wearing a fall arrest apparatus including a human body supporting device according to a second embodiment of the present invention;
FIG. 7 is a front view of the worker wearing the fall arrest apparatus including the human body supporting device according to the second embodiment of the present invention;

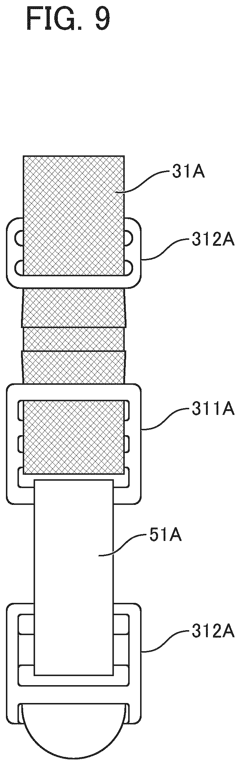

FIG. 8 is a back view of an area around a D-ring of the fall arrest apparatus including the human body supporting device according to the second embodiment of the present invention; FIG. 9 is a back view of a portion of a first tension spring connected to the D-ring of the fall arrest apparatus including the human body supporting device according to the second embodiment of the present invention;
FIG. 10 is a back view of a linking member branching belt part, second tension springs, and leg fixing members of the fall arrest apparatus including the human body supporting device according to the second embodiment of the present invention;
FIG. 11 is a graph showing the relationship between the amount of extension and the outputs of the first tension spring and the second tension springs of the fall arrest apparatus including the human body supporting device according to the second embodiment of the present invention;
FIG. 12 is a back view of a worker wearing a fall arrest apparatus including a human body supporting device according to a third embodiment of the present invention; and
FIG. 13 is a front view of the worker wearing the fall arrest apparatus including the human body supporting device according to the third embodiment of the present invention.

### PREFERRED MODE FOR CARRYING OUT THE INVENTION

The following describes a first embodiment of the present invention with reference to the drawings. In the following description, the front side is defined as the forward side in the front-back direction, the right and left sides are defined as the right and left sides in the left-right direction, and the upper and lower sides are defined as the upper and lower sides in the up-down direction as viewed from a user P wearing a human body supporting device 1 and standing upright.

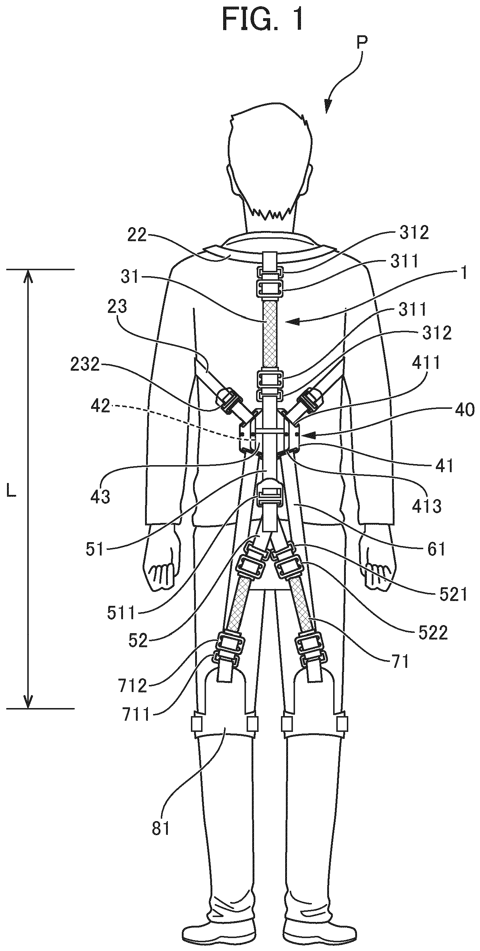

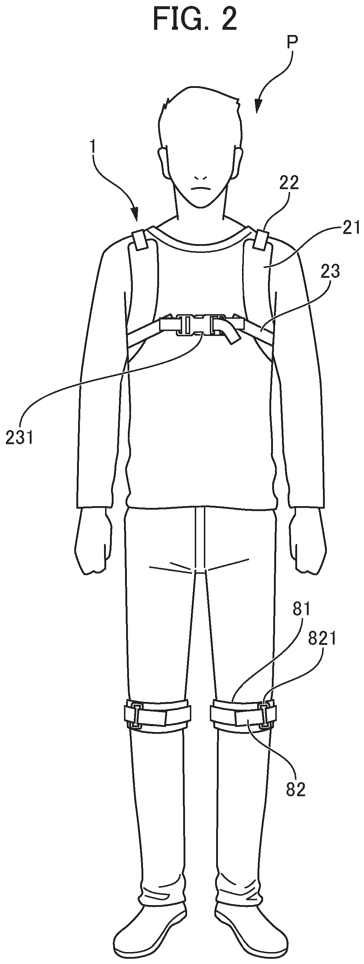

As shown in FIGS. 1 and 2, for example, the human body supporting device 1 includes a first tension spring 31, a linking member 51, and second tension springs 71. An upper end portion of the first tension spring 31 is connected and fastened to a central end portion of a T-shaped linking belt 22 via a length-adjustable adjuster 311 and a rectangular ring 312. Left and right end portions of the linking belt 22 are respectively connected to upper portions of shoulder belts 21. A lower end portion of the first tension spring 31 is connected to an upper end portion of the linking member 51 via a length-adjustable adjuster 311 and a rectangular ring 312. The shoulder belts 21 and the linking belt 22 form upper body-mounted belts that are respectively mounted on the left and right shoulders of the user P.

Substantially central portions of middle belts 23 are fixed to lower portions of the shoulder belts 21. End portions of the left and right middle belts 23 are joined using a buckle 231 at the front side of the user P. Opposite end portions of the left and right middle belts 23 are respectively threaded through a pair of slits 411 formed in an upper portion of a body 41 of a separation member 40 using ladder lock buckles 232 and connected. As described above, the first tension spring 31 is positioned at the back of the user P to run in the up-down direction of the back.

A substantially central portion of the linking member 51 is disposed in a groove 43 extending in the up-down direction and constituting a central portion of the body 41 of the separation member 40, in which a cushion member 42 is contained. As described above, the separation member 40 is positioned between the linking member 51 and the back of the user P. A lower end portion of the linking member 51 is connected, using the ladder lock buckles 232, to an upper end portion of a linking member branching belt part 52, which is bifurcated into a left-side linking part and a right-side linking part at a location closer to the lower limbs of the user P than the separation member 40. Lower end portions of the bifurcated linking member branching belt part 52 are respectively connected to upper end portions of the second tension springs 71 via rectangular rings 521 and length-adjustable adjusters 522. As described above, the linking member 51 and the linking member branching belt part 52 link the first tension spring 31 and the second tension springs 71.

Lower end portions of the second tension springs 71 are connected to back portions of leg fixing members 81 via length-adjustable adjusters 712 and rectangular rings 711. The leg fixing members 81 are wrapped around below-knee areas of the user P and fixed to the lower limbs of the user P. As described above, the second tension springs 71 are mounted on the left and right lower limbs of the user P. The second tension spring 71 that is positioned on the back side of the left leg constitutes a left-side second spring part. The second tension spring 71 that is positioned on the back side of the right leg constitutes a right-side second spring part. The left-side second spring part is connected to the left-side linking part of the bifurcated linking member branching belt part 52. The right-side second spring part is connected to the right-side linking part of the bifurcated linking member branching belt part 52.

Upper end portions of woven rubber strips 61 are respectively threaded through a pair of slits 413 formed in a lower portion of the body 41 of the separation member 40 and connected. Lower end portions of the woven rubber strips 61 are connected to the back portions of the leg fixing members 81 where the lower end portions of the second tension springs 71 are connected.

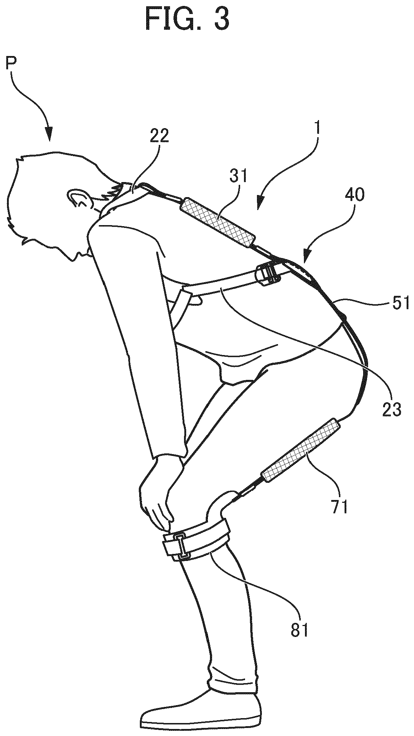

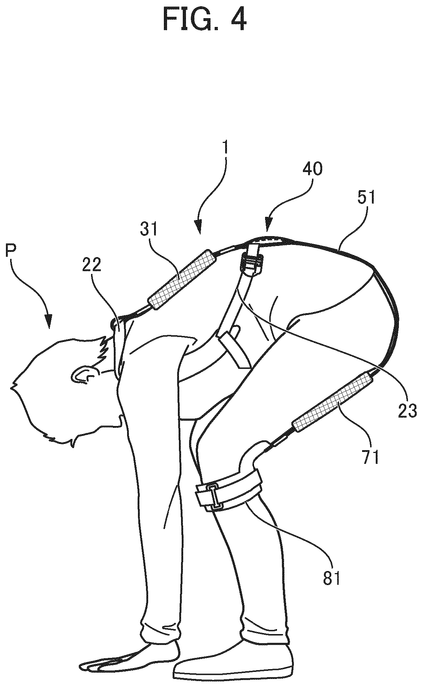

Next, the details of each component of the human body supporting device 1 will be described. The first tension spring 31 and the second tension springs 71 are configured to extend as the user P bends forward as shown in FIGS. 3 and 4 in such a manner that the second tension springs 71 mainly extend first, and then the first tension spring 31 mainly extends.

That is, the first tension spring 31 has a different spring constant from the second tension springs 71, and the spring constant of the first tension spring 31 is greater than the spring constant of the second tension springs 71. Under the condition that the first tension spring 31 and the second tension springs 71 are stretched by the same length (with the same displacement), therefore, the first tension spring 31 exerts a stronger restoring force than the second tension springs 71. A displacement with which the second tension springs 71 extend upon being stretched with a predetermined force is greater than a displacement with which the first tension spring 31 extends upon being stretched with the same predetermined force. Each of the second tension springs 71 includes a restriction member that restricts the second tension spring 71 from extending beyond a predetermined length once the second tension spring 71 has been stretched to the predetermined length. This restriction allows the first tension spring 31 to mainly extend after the second tension springs 71 mainly extend.

Specifically, the first tension spring 31 is made of a material that extends and exerts a restoring force to elastically return to its original length when stretched. Examples of usable materials include a double-layered rubber tube or a tube obtained by filling the inside of an elastic tube of a so-called McKibben-type artificial muscle with gas (air), and sealing the elastic tube to create a closed space. In the present embodiment, a double-layered rubber tube is used as the first tension spring 31.

Each of the second tension springs 71 is, for example, made of a flat rubber strip having a smaller spring constant than the double-layered rubber tube forming the first tension spring 31 and a tubular mesh sleeve serving as a covering member that covers the circumference of the flat rubber strip. As such, the spring coefficient of the first tension spring 31 is four times the spring coefficient of the second tension springs 71. The mesh sleeve includes, for example, a first wire and a second wire, such as low-stretch high-tensile fibers, that are braided and woven together in an intersecting arrangement. The mesh sleeve extends together with the flat rubber strip by a predetermined amount when two ends of the mesh sleeve are pulled in a direction for separating the two ends. However, the mesh sleeve does not extend beyond the predetermined amount, and thus constitutes the restriction member that restricts further extension of the flat rubber strip.

The linking member 51 is configured to be less stretchable than the first tension spring 31 and the second tension springs 71. Specifically, the linking member 51 is made of a strip of polypropylene (PP) tape, for example.

The cushion member 42 contained in the body 41 of the separation member 40 comes into direct contact with the back of the user P and is made of foamed polyethylene. A plurality of cushion members 42 that differ in thickness are available, so that a cushion member 42 having an appropriate thickness is selected according to the body shape or the like of the user P and placed in the body 41. Thus, it is possible to separate the lower end portion of the first tension spring 31 from the back of the user P by adjusting the distance from the back of the user P to the linking member 51 disposed in the groove 43 of the separation member 40 to an appropriate value.

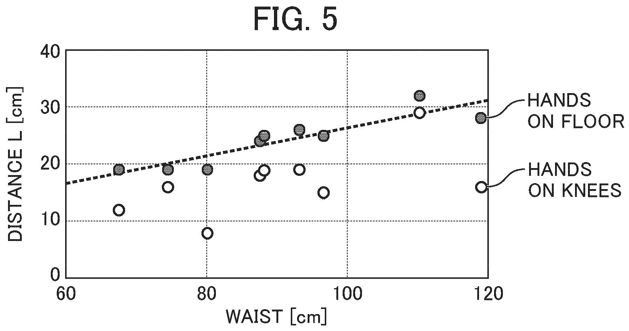

Next, a distance L shown in FIG. 1 will be described. A test was conducted to determine the amount of extension needed when the user P bends forward as shown in FIGS. 3 and 4. In the test, the waist lengths of a plurality of users P were measured, and the distance L was measured for each user P when the user P bent forward as shown in FIG. 3 and when the user P bent forward as shown in FIG. 4 to determine how much the distance L increased from the distance L measured when the user P was wearing the device in a state shown in FIGS. 1 and 2. The results of the test are as shown in FIG. 5.

As shown in FIG. 5, the amount of extension in the distance L measured when each user P bent forward with his/her hands touching his/her knees show variation. By contrast, FIG. 5 indicates that the amount of extension in the distance L measured when each user P bent forward with his/her hands touching a floor showed less variation. The correlation coefficient between the amount of extension in the distance L and the waist length of the user P in this state is 0.90, and the standard deviation of the difference from an approximate straight line shown by a dashed line in FIG. 5 is 2.00. Thus, when designing the human body supporting device 1, it is possible to determine the configuration, the spring constant, and the amount of extension (amount of displacement due to stretch) of the first tension spring 31 and the second tension springs 71 based on the amount of extension in the distance L determined with respect to the waist length of the user P.

According to the embodiment described above, the following advantageous effects can be achieved. The present embodiment includes: the first tension spring 31 that is positioned at the back of a user P to run in the up-down direction of the back, the second tension springs 71 that are mounted on the lower limbs of the user P; and the linking member 51 linking the first tension spring 31 and the second tension springs 71. The first tension spring 31 has a different spring constant from the second tension springs 71, and the spring constant of the first tension spring 31 is greater than the spring constant of the second tension springs 71. A displacement with which the second tension springs 71 extend upon being stretched with a predetermined force is greater than a displacement with which the first tension spring 31 extends upon being stretched with the predetermined force. The second tension springs 71 are restricted from extending beyond a predetermined length once the second tension springs 71 have been stretched to the predetermined length, thereby allowing the first tension spring 31 to extend.

This configuration allows the second tension springs 71 to mainly extended first to exert a weaker restoring force on the user P, and the first tension spring 31 to extend thereafter to exert a stronger restoring force on the user P, when the user bends forward, trying to lift something, for example. As a result, the present invention can provide a human body supporting device 1 that makes it possible to assist a user P with natural movement by gently applying assistive force in accordance with the motion of the user P during work.

The present embodiment further includes the separation member 40 that is positioned between the linking member 51 and the user P, and separates the lower end portion of the first tension spring 31 from the back of the user. This configuration makes it possible to separate the lower end portion of the first tension spring 31 from the back of the user P, and to prevent the first tension spring 31 from coming into contact with the back of the user P and exerting an excessive restoring force.

In the present embodiment, the linking member 51 is bifurcated into the left-side linking part and the right-side linking part at a location closer to the lower limbs of the user P than the separation member 40, the second tension springs 71 include the left-side second spring part that is positioned on the back side of the left leg and the right-side second spring part that is positioned on the back side of the right leg, the left-side linking part is connected to the left-side second spring part, and the right-side linking part is connected to the right-side second spring part. This configuration makes it possible to generate a restoring force along the left and right legs of the user P and to appropriately support the left and right legs of the user P.

The present embodiment further includes the linking belt 22 forming the upper body-mounted belts that are respectively mounted on the left and right shoulders of the user P, and an end portion of the linking belt 22 is fastened to the upper end portion of the first tension spring 31. This configuration allows the upper end portion of the first tension spring 31 to be supported by the shoulders of the user P, so that the user P can wear the human body supporting device 1 stably.

In the present embodiment, the first tension spring 31 is made of a double-layered rubber tube. This configuration allows the first tension spring 31 to have a greater spring constant than the second tension springs 71, which are made of flat rubber strips. This configuration also allows for a reduction in cost related to the human body supporting device 1 compared to a configuration in which an artificial muscle is used as the first tension spring.

In the present embodiment, the second tension springs 71 are each made of a flat rubber strip covered by a mesh sleeve serving as a covering member including a first wire and a second wire braided together in an intersecting arrangement. This configuration allows the mesh sleeve to easily restrict the flat rubber strip from extending beyond a predetermined length once the flat rubber strip has been stretched to the predetermined length.

The following describes a harness-type fall arrest apparatus 100A including a human body supporting device 1A according to a second embodiment. The human body supporting device according to the second embodiment constitutes part of the fall arrest apparatus 100A. Some components thereof such as a shoulder belt 21A-1, a shoulder belt 21A-2, a linking belt 22A-1, a linking belt 22A-2, a first tension spring 31A, a linking member branching belt part 52A, second tension springs 71A, and leg fixing members 81A have different configurations from the shoulder belts 21, the linking belt 22, the first tension spring 31, the linking member branching belt part 52, the second tension springs 71, and the leg fixing members 81 of the first embodiment. The fall arrest apparatus 100A differs from the human body supporting device according to the first embodiment in that the fall arrest apparatus 100A includes an upper pelvic belt 26A-1, an upper pelvic belt 26A-2, a lower pelvic belt 27A-1, and a lower pelvic belt 27A-2. The fall arrest apparatus 100A also differs from the human body supporting device according to the first embodiment in that the fall arrest apparatus 100A is provided with a D-ring 313A that serves as a belt linking member. The fall arrest apparatus 100A also differs from the human body supporting device according to the first embodiment in that the second tension springs 71A do not include a restriction member made of a mesh sleeve serving as a covering member.

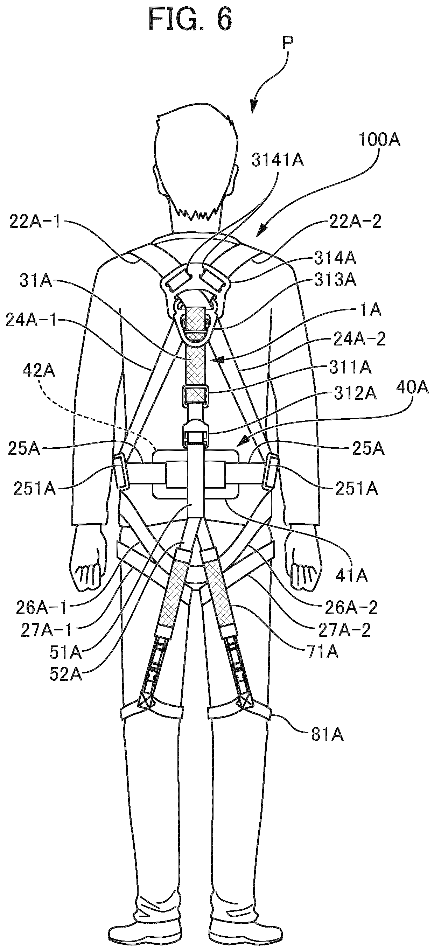

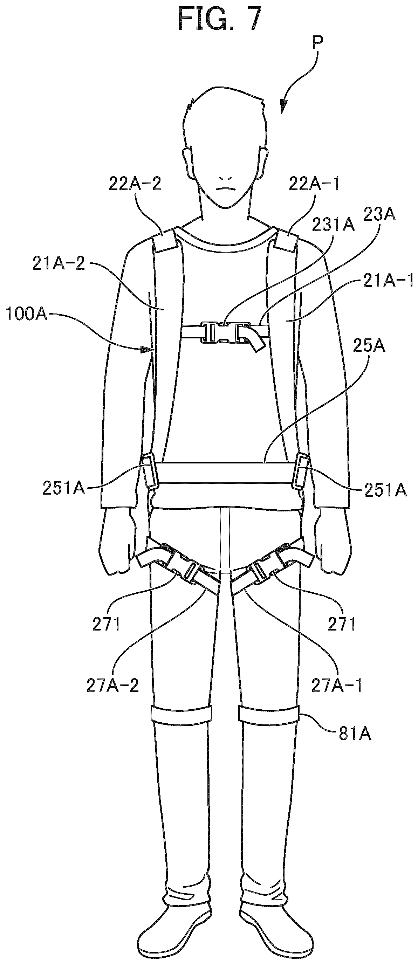

As shown in FIGS. 6 and 7, for example, the human body supporting device 1A includes the first tension spring 31A, a linking member 51A, and the second tension springs 71A. The fall arrest apparatus 100A including the human body supporting device 1A includes, for example, the shoulder belt 21A-1, the shoulder belt 21A-2, the linking belt 22A-1, the linking belt 22A-2, and the leg fixing members 81A.

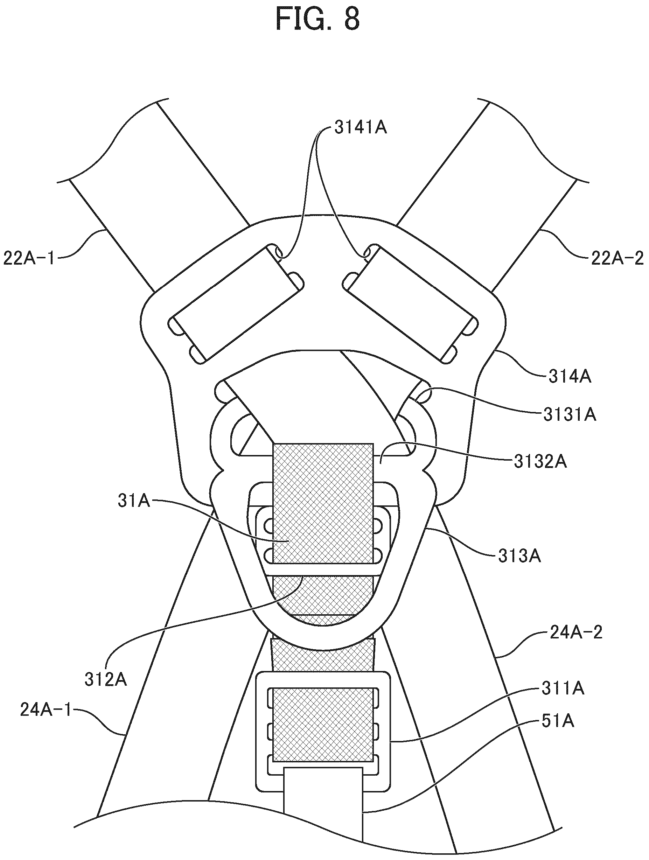

An upper end portion of the first tension spring 31A is threaded through a rectangular ring 312A, and hooked and fastened onto a central straight section 3132A of the D-ring 313A as shown in FIG. 8. The first tension spring 31A is threaded through a lower section of the D-ring 313A, and a lower end portion of the first tension spring 31A is connected to an upper end portion of the linking member 51A via a length-adjustable adjuster 311A.

A lower end portion of the linking belt 22A-2 is hooked onto an upper curved section 3131A of the D-ring 313A and extends leftward to serve as a left-side back belt 24A-1. A lower end portion of the left-side back belt 24A-1 is connected and fixed to an area in the vicinity of the back side of an adjuster 251A provided on the left side of the waist belt 25A, which encircles an area above the pelvis, to adjust the length of the waist belt 25A. A lower end portion of the linking belt 22A-1 is also hooked onto the upper curved section 3131A of the D-ring 313A and extends rightward over the lower end portion of the linking belt 22A-2 to serve as a right-side back belt 24A-2. A lower end portion of the right-side back belt 24A-2 is connected and fixed to an area in the vicinity of the back side of an adjuster 251A provided on the right side of the waist belt 25A, which encircles the area above the pelvis, to adjust the length of the waist belt 25A.

The linking belt 22A-1 and the linking belt 22A-2 are respectively threaded through slits 3141A formed in a D-ring stopper 314A, and extend to the left and right shoulders of the user P. Upper end portions of the linking belt 22A-1 and the linking belt 22A-2 are respectively connected to upper end portions of the shoulder belt 21A-1 and the shoulder belt 21A-2 as shown in FIG. 7.

Lower end portions of the shoulder belt 21A-1 and the shoulder belt 21A-2 are respectively fixed to areas in the vicinity of the front sides of the adjusters 251A provided on the left and right sides of the waist belt 25A, which encircles the area above the pelvis, to adjust the length of the waist belt 25A, and extend backward to respectively serve as the upper pelvic belt 26A-1 and the upper pelvic belt 26A-2. A back portion of the waist belt 25A is threaded through a body 41A of a separation member 40A. Left and right end portions of a middle belt 23A are connected and fixed to middle portions of the shoulder belt 21A-1 and the shoulder belt 21A-2 as shown in FIG. 7. Central portions of the middle belt 23A are joined using a buckle 231A at the front side of the user P. As described above, the upper end portion of the first tension spring 31A is linked, using the D-ring 313A, to the lower end portions of the linking belt 22A-1 and the linking belt 22A-2 connected to the shoulder belt 21A-1 and the shoulder belt 21A-2 serving as upper body-mounted belts that are respectively mounted on the left and right shoulders of the user P.

Lower end portions of the upper pelvic belt 26A-1 and the upper pelvic belt 26A-2 are connected together into a single continuous section. The lower pelvic belt 27A-1 and the lower pelvic belt 27A-2 respectively encircle areas at the bases of the left leg and the right leg. Front portions of the lower pelvic belt 27A-1 are joined using a buckle 271. Front portions of the lower pelvic belt 27A-2 are joined using a buckle 271.

A substantially central portion of the linking member 51A is disposed on a central portion of the body 41A of the separation member 40A. The separation member 40A is made of hard urethane that is resilient enough to maintain its own predetermined height (thickness). As described above, the separation member 40A having a predetermined height is positioned between the linking member 51A and the back of the user P. A lower end portion of the linking member 51A is connected to an upper end portion of the linking member branching belt part 52A, which is bifurcated into a left-side linking part and a right-side linking part at a location closer to the lower limbs of the user P than the separation member 40A. Lower end portions of the bifurcated linking member branching belt part 52A are respectively connected to upper end portions of the second tension springs 71A. As described above, the linking member 51A and the linking member branching belt part 52A link the first tension spring 31A and the second tension springs 71A, and the first tension spring 31A is positioned at the back of the user P to run in the up-down direction of the back.

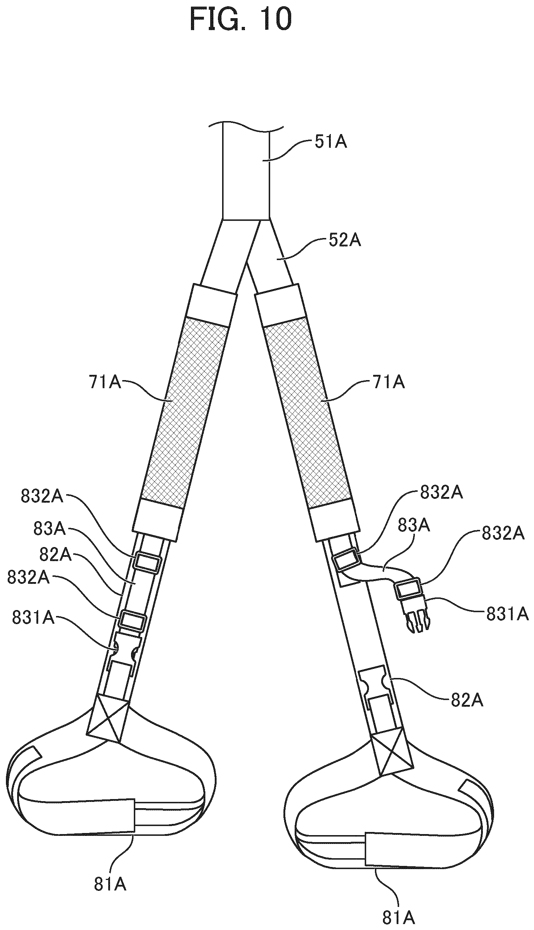

Lower end portions of the second tension springs 71A are connected to back portions of the leg fixing members 81 as shown in FIG. 6 via nylon rubber strips 82A and strips of polypropylene (PP) tape 83A each provided with a length-adjustable adjuster 832A and a buckle 831A as shown in FIG. 10. Each buckle 831A is switchable between a state of the left buckle and an unbuckled state of the right buckle shown in FIG. 10. The leg fixing members 81A are strip-shaped, and are wrapped around below-knee areas of the user P and fixed to the lower limbs of the user P. As described above, the second tension springs 71A are mounted on the left and right lower limbs of the user P.

The second tension spring 71A that is positioned on the back side of the left leg constitutes a left-side second spring part. The second tension spring 71A that is positioned on the back side of the right leg constitutes a right-side second spring part. The left-side second spring part is connected to the left-side linking part of the bifurcated linking member branching belt part 52A. The right-side second spring part is connected to the right-side linking part of the bifurcated linking member branching belt part 52A.

Next, the details of each component of the fall arrest apparatus 100A including the human body supporting device 1A will be described. Like the first tension spring 31 and the second tension springs 71 of the human body supporting device 1 according to the first embodiment, the first tension spring 31A and the second tension springs 71A are configured to extend as the user P bends forward in such a manner that the second tension springs 71A mainly extend first, and then the first tension spring 31A mainly extends. However, the present embodiment is configured so that the linking member 51A is prevented from moving downward, and the rectangular ring 312A is prevented from coming to lie on top of the body 41A of the separation member 40A through the length of the first tension spring 31 being appropriately adjusted and the linking member 51A exhibiting high friction against the body 41A of the separation member 40A. This configuration is based on the fact that the first tension spring 31A starts to extend after the frictional force resulting from the linking member 51A being pressed against the body 41A of the separation member 40A and the tension of the second tension springs 71A, and the tension of the first tension spring 31A have been balanced to achieve equilibrium.

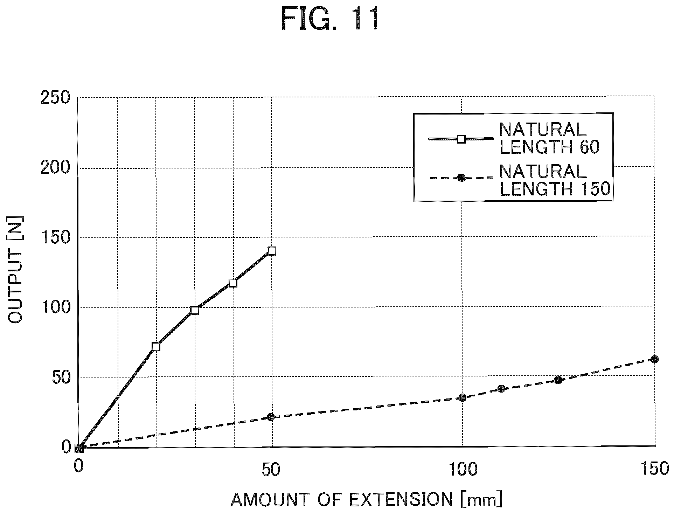

That is, the first tension spring 31A has a different spring constant from the second tension springs 71A, and the spring constant of the first tension spring 31A is greater than the spring constant of the second tension springs 71A. Specifically, the spring constant of the first tension spring 31A is four to eight times the spring constant of the second tension springs 71A. In the present embodiment, the spring constant of the first tension spring 31A is approximately six times the spring constant of the second tension springs 71A as shown in FIG. 11. This is because of the following reasons. If the spring constant of the first tension spring 31A is less than four times the spring constant of the second tension springs 71A, the difference in the amount of extension therebetween is too small under the condition that the outputs of the first tension spring 31A and the second tension springs 71A are the same. If the spring constant of the first tension spring 31A is more than eight times the spring constant of the second tension springs 71A, the difference in the amount of extension therebetween is too large under the condition that the outputs of the first tension spring 31A and the second tension springs 71A are the same.

Under the condition that the first tension spring 31A and the second tension springs 71A are stretched by the same length (with the same displacement), therefore, the first tension spring 31A exerts a stronger restoring force than the second tension springs 71A. A displacement with which the second tension springs 71A extend upon being stretched with a predetermined force is greater than a displacement with which the first tension spring 31A extends upon being stretched with the same predetermined force. This configuration allows the first tension spring 31A to mainly extend after the second tension springs 71A mainly extend.

Specifically, the first tension spring 31A is made of a material that extends and exerts a restoring force to elastically return to its original length when stretched. Examples of usable materials include a double-layered rubber tube or a tube obtained by filling the inside of an elastic tube of a so-called McKibben-type artificial muscle with gas (air), and sealing the elastic tube to create a closed space. In the present embodiment, a spring obtained by flattening a rubber tube into a strip is used as the first tension spring 31A. In the present embodiment, for example, a spring composed solely of a flat rubber strip is used as each second tension spring 71A.

The linking member 51A is configured to be less stretchable than the first tension spring 31A and the second tension springs 71A. Specifically, the linking member 51A is made of a strip of polypropylene (PP) tape, for example.

According to the embodiment described above, the following advantageous effects can be achieved. The upper end portion of the first tension spring 31A is linked, using the D-ring 313A, to the lower end portions of the linking belt 22A-1 and the linking belt 22A-2 connected to the shoulder belt 21A-1 and the shoulder belt 21A-2 serving as upper body-mounted belts that are respectively mounted on the left and right shoulders of the user P. This configuration allows the fall arrest apparatus 100A including the human body supporting device 1A to serve as a harness-type safety belt for preventing falls during high-place work at construction sites and similar locations.

The following describes a harness-type fall arrest apparatus 100B including a human body supporting device 1B according to a third embodiment. The human body supporting device 1B according to the third embodiment constitutes part of the fall arrest apparatus 100B. Some components thereof such as a shoulder belt 21B-1, a shoulder belt 21B-2, a linking belt 22B-1, a linking belt 22B-2, an upper belt 31B, a linking member branching belt part 52B, second tension springs 71A, and leg fixing members 81A have different configurations from the shoulder belts 21, the linking belt 22, the first tension spring 31, the linking member branching belt part 52, the second tension springs 71, and the leg fixing members 81 of the first embodiment. The fall arrest apparatus 100B differs from the human body supporting device according to the first embodiment in that the fall arrest apparatus 100B includes a lower pelvic belt 27B-1 and a lower pelvic belt 27B-2. The fall arrest apparatus 100B also differs from the human body supporting device according to the first embodiment in that the fall arrest apparatus 100B is provided with a D-ring 313A that serves as a belt linking member. The fall arrest apparatus 100B also differs from the human body supporting device according to the first embodiment in that the second tension springs 71A do not include a restriction member made of a mesh sleeve serving as a covering member. Hereinafter, the same members as those of the second embodiment are labeled with the same reference numerals as in the second embodiment, and description thereof is omitted.

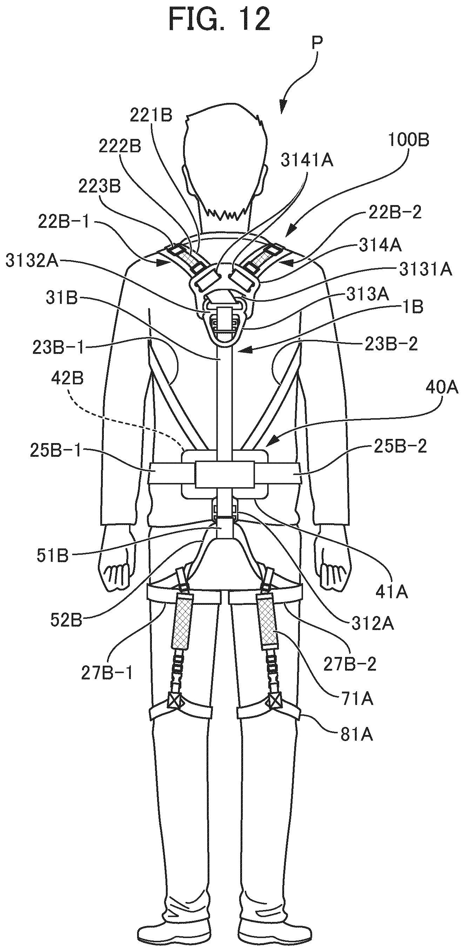

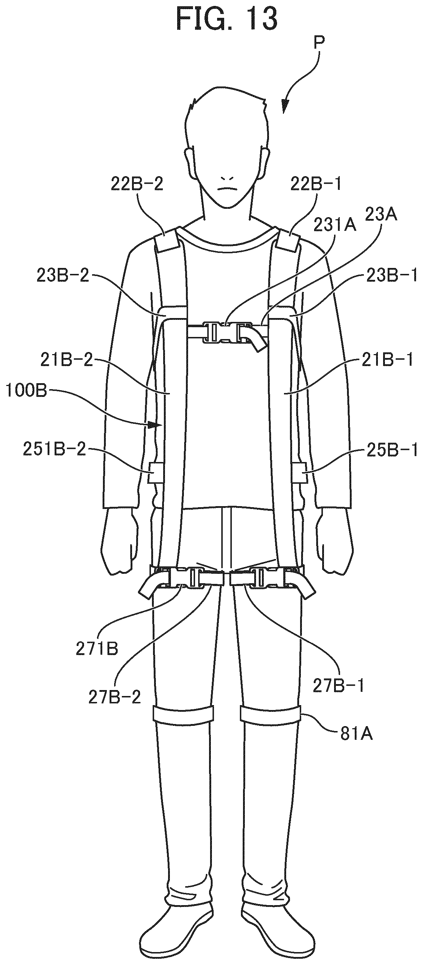

As shown in FIGS. 12 and 13, the human body supporting device 1B includes the upper belt 31B, a linking member 51B, and the second tension springs 71A. The fall arrest apparatus 100B including the human body supporting device 1B includes, for example, the shoulder belt 21B-1, the shoulder belt 21B-2, the linking belt 22B-1, the linking belt 22B-2, and the leg fixing members 81A.

An upper end portion of the upper belt 31B is hooked and fastened onto a central straight section 3132A of the D-ring 313A. The upper belt 31B is threaded through a lower section of the D-ring 313A, and a lower end portion of the upper belt 31B is connected to an upper end portion of the linking member 51B via a rectangular ring 312A.

The linking belt 22B-1 and the linking belt 22B-2 are respectively threaded through slits 3141A formed in a D-ring stopper 314A, and extend to the left and right shoulders of the user P. A lower end portion of the linking belt 22B-2 is hooked onto and folded at an upper curved section 3131A of the D-ring 313A, and extends leftward to serve as the linking belt 22B-1. Upper end portions of the linking belt 22B-1 and the linking belt 22B-2 are respectively connected to upper end portions of the shoulder belt 21B-1 and the shoulder belt 21B-2 as shown in FIG. 13.

The linking belt 22B-1 and the linking belt 22B-2 each have a belt part 221B, which is made of the same material as the shoulder belt 21B-1 and the shoulder belt 21B-2, and a two-layer flat rubber strip 222B provided on the upper surface of the belt part 221B.

Lower end portions of the shoulder belt 21B-1 and the shoulder belt 21B-2 are connected to front areas of the lower pelvic belt 27B-1 and the lower pelvic belt 27B-2 that respectively encircle areas at the bases of the left leg and the right leg. Front portions of the lower pelvic belt 27B-1 are joined using a buckle 271B. Front portions of the lower pelvic belt 27B-2 are joined using a buckle 271. Lower end-ward areas of middle portions of the shoulder belt 21B-1 and the shoulder belt 21B-2 are connected to front end portions of a waist belt 25B-1 and a waist belt 25B-2 that surround the sides and the back of the pelvis. Back end portions of the waist belt 25B-1 and the waist belt 25B-2 are inserted into a body 41A of a separation member 40A.

Upper end portions of a side belt 23B-1 and a side belt 23B-2 are connected and fixed to upper end-ward areas of the middle portions of the shoulder belt 21B-1 and the shoulder belt 21B-2. Left and right end portions of a middle belt 23A are connected and fixed to areas below the upper end-ward areas of the middle portions of the shoulder belt 21B-1 and the shoulder belt 21B-2 as shown in FIG. 13. Central portions of the middle belt 23A are joined using a buckle 231A at the front side of the user P. Lower end portions of the side belt 23B-1 and the side belt 23B-2 are each connected to an upper portion of the body 41A of the separation member 40A. As described above, the upper end portion of the upper belt 31B is linked, using the D-ring 313A, to the lower end portion of the linking belt 22B-1 and the linking belt 22B-2 connected to the shoulder belt 21B-1 and the shoulder belt 21B-2 serving as upper body-mounted belts that are respectively mounted on the left and right shoulders of the user P.

A lower end-ward portion of the upper belt 31B is threaded through the body 41A of the separation member 40A. As described above, the separation member 40A is positioned between the upper belt 31B and the back of the user P. The rectangular ring 312A linking the upper belt 31B and the linking member 51B is located below the body 41A. A lower end portion of the linking member 51B is connected to an upper end portion of the linking member branching belt part 52B, which is bifurcated into a left-side linking part and a right-side linking part at a location closer to the lower limbs of the user P than the separation member 40A. Lower portions of the bifurcated linking member branching belt part 52B are respectively connected to upper end portions of the second tension springs 71A. As described above, the D-ring stopper 314A, the D-ring 313A, the upper belt 31B, the linking member 51B, and the linking member branching belt part 52B link the flat rubber strips 222B, which serve as a first tension spring, to the second tension springs 71A, and the upper belt 31B is positioned at the back of the user P to run in the up-down direction of the back.

The present invention is not limited to the embodiments described above, and may be implemented in various modes within the scope of the claims. For example, the configuration of each component of the human body supporting device is not limited to that of each component of the human body supporting device 1. For example, the first tension spring 31 is made of a double-layered rubber tube, but is not limited as such. For example, four flat rubber strips, such as those used for forming the second tension springs 71, may be layered and used as the first tension spring 31.

### EXPLANATION OF REFERENCE NUMERALS

1, 1A, 1B: Human body supporting device
21, 21A-1, 21A-2, 21B-1, 21B-2: Shoulder belt (upper body-mounted belt)
31, 31A: First tension spring
40: Separation member
40A: Separation member
51, 51A, 51B: Linking member
71, 71A: Second tension spring
222B: Flat rubber strip (first tension spring)
313A: D-ring (belt linking member)
P: User

## Claims

1. A human body supporting device comprising:
a first tension spring that is positioned at the back of a user to run in an up-down direction of the back;
second tension springs that are mounted on the lower limbs of the user; and
a linking member linking the first tension spring and the second tension springs, wherein
the first tension spring has a different spring constant from the second tension springs, and the spring constant of the first tension spring is greater than the spring constant of the second tension springs.

2. The human body supporting device according to claim 1, wherein
the second tension springs are restricted from extending beyond a predetermined length once the second tension springs have been stretched to the predetermined length, thereby allowing the first tension spring to extend.

3. The human body supporting device according to claim 1, further comprising:
a separation member that is positioned between the linking member and the user, and separates a lower end portion of the first tension spring from the back of the user.

4. The human body supporting device according to claim 3, wherein
the linking member is bifurcated into a left-side linking part and a right-side linking part at a location closer to the lower limbs of the user than the separation member,
the second tension springs include a left-side second spring part that is positioned on the back side of the left leg and a right-side second spring part that is positioned on the back side of the right leg,
the left-side linking part is connected to the left-side second spring part, and
the right-side linking part is connected to the right-side second spring part.

5. The human body supporting device according to claim 1, further comprising:
upper body-mounted belts that are respectively mounted on the left and right shoulders of the user, and end portions of the upper body-mounted belts are fastened to an upper end portion of the first tension spring.

6. The human body supporting device according to claim 5, wherein
the upper end portion of the first tension spring and lower end portions of the upper body-mounted belts that are respectively mounted on the left and right shoulders of the user are linked using a belt linking member.

7. The human body supporting device according to claim 1, wherein
the first tension spring is made of a rubber tube.

8. The human body supporting device according to claim 1, wherein
the second tension springs are each made of a flat rubber strip covered by a covering member including a first wire and a second wire braided together in an intersecting arrangement, and
the covering member restricts the flat rubber strip from extending beyond a predetermined length once the flat rubber strip has been stretched to the predetermined length.

9. The human body supporting device according to claim 1, wherein
the spring constant of the first tension spring is four to eight times the spring constant of the second tension springs.

10. A human body supporting device comprising:
a first tension spring that is positioned at the back of a user to run in an up-down direction of the back;
second tension springs that are mounted on the lower limbs of the user; and
a linking member linking the first tension spring and the second tension springs, wherein
a displacement with which the second tension springs extend upon being stretched with a predetermined force is greater than a displacement with which the first tension spring extends upon being stretched with the predetermined force.

11. The human body supporting device according to claim 10, further comprising:
a restriction member that restricts each of the second tension springs from extending beyond a predetermined length once the second tension springs have been stretched to the predetermined length.

12. A fall arrest apparatus comprising the human body supporting device according to any one of claims 1 to 11.
